# EUROPÄISCHE PATENTSCHRIFT

(11) **EP 0 814 721 B1**
(45) Veröffentlichungstag und Bekanntmachung des Hinweises auf die Patenterteilung: **07.07.1999**
(21) Anmeldenummer: 96905662.1
(22) Anmeldetag: 19.03.1996
(51) Int. Cl.: A61C 5/00, A61C 13/30

(54) **ERMÜDUNGSFESTE GEOMETRIE VON PARAPULPÄREN ODER ENDODONTISCHEN VERANKERUNGSELEMENTEN**
FATIGUE-PROOF GEOMETRY OF PARAPULPAR OR ENDODONTIC SECURING COMPONENTS
GEOMETRIE RESISTANT A LA FATIGUE D'ELEMENTS D'ANCRAGE PARAPULPAIRES OU ENDODONTIQUES

(30) Priorität: 23.03.1995 CH 83695
(43) Veröffentlichungstag der Anmeldung: 07.01.1998
(73) Patentinhaber: INSTITUT STRAUMANN AG, 4437 Waldenburg (CH)
(72) Erfinder: SCHÄR, Alex, Robert, CH-4125 Riehen (CH)
(74) Vertreter: Ullrich, Gerhard, Dr.
(86) Internationale Anmeldenummer: CH9600105
(87) Internationale Veröffentlichungsnummer: WO9629017

(56) Entgegenhaltungen:
- EP-A- 0 359 868
- WO-A-79/00275
- CH-A- 663 145
- MAILLEFER: (FIRMENSCHRIFT): "RADIX-ANKER-LONG " Dezember 1991 , BALLAIGUES, SCHWEIZ XP002003448 in der Anmeldung erwähnt siehe Seite 2 - Seite 3 siehe Seite 6 - Seite 7

## Beschreibung

Die vorliegende Erfindung betrifft dentaltechnische Verankerungselemente und umfasst Wurzelkanalschrauben und -stifte sowie Parapulpärschrauben und -stifte mit einer ermüdungsfesten Geometrie, welche mittels der CAO-Optimierungs-methode (Computer Aided Optimization) optimiert ist.

Wurzelkanalschrauben bzw. -stifte werden als Verankerungselemente bei der Restauration stark zerstörter Zahnkronen eingesetzt, sofern ein nur mehr spärlich vorhandenes Zahnhartgewebe keine ausreichende Retention mehr für den plastischen Aufbau oder den direkten Kronenaufbau gewährleistet. Aufbauten mit Wurzelkanalelementen sind bei ein- und mehrwurzeligen Zähnen im Front- und Seitenzahnbereich nach einer erfolgreich abgeschlossenen Wurzelbehandlung am devitalen Zahn indiziert. Je nach Zerstörungsgrad muss man die derart aufgebauten Zähne überkronen. Parapulpäre Verankerungselemente hingegen dienen zur Retention plastischer Füllungsmaterialien am vitalen Zahn, deren Pulpa noch erhaltungswürdig ist. Die Parapulpärelemente werden im Dentin so positioniert, dass die lebende Pulpa nicht irritiert wird und ungeschädigt bleibt.

An derartige Verankerungselemente werden besonders hohe Anforderungen in materialtechnischer und konstruktiver Hinsicht gestellt. Dazu gehören im wesentlichen:
- Biokompatibilität und Korrosionsresistenz;
- hohe mechanische und elektrochemische Festigkeit bei kleinen Bauteildimensionen;
- elektrochemische Verträglichkeit zwischen den Verankerungselementen, dem Aufbau sowie verwendetem Kronenmaterial;
- exakte Wandständigkeit im Wurzelkanal bzw. im Dentin;
- dichter Abschluss der Kanäle;
- harmonische Belastungsverteilung und
- günstige koronare Retention für das plastische Füllungsmaterial oder den Kronenaufbau.

Gegenstand der Erfindung ist allein die konstruktive Gestaltung der Verankerungselemente, während man als Material vorrangig an sich bekannte und bewährte Titanlegierungen einsetzt. Aus dem Schrifttum ist eine Vielzahl von Verankerungselementen bekannt, darunter Schrauben mit einem Gewinde oder einem selbstschneidenden Gewinde bzw. Stifte verschiedener Querschnittsgeometrien, die in Zement eingesetzt oder in einem Sitz gehalten werden. Grundsätzlich besteht ein Verankerungselement aus der in den Kanal eingesetzten Verankerungspartie und der herausragenden Kopfpartie, um welche der Aufbau angebracht wird. Zumeist ist die Kopfpartie gegenüber der Verankerungspartie wesentlich verdickt, so dass eine schulterhafte Auflage zur günstigen Verteilung der einwirkenden Belastungskräfte entsteht, wobei die Auflage vollständig und fugenlos auf dem Dentin aufsitzen soll. Für die Anwendung im Frontzahnbereich ist die Kopfpartie im Prinzip als zylindrokonischer Vollkörper ausgestaltet. Für den Seitenzahnbereich hingegen besitzen die Verankerungselemente eine je nach Grösse des zu schaffenden Aufbaus strukturierte Kopfpartie mit mehreren zueinander beabstandeten Retentionstellern (vgl. produktekatalog: "Aufbausysteme für die restaurative Zahnheilkunde" der Institut Straumann AG, Waldenburg/Schweiz, Januar 1994).

Ein eingesetztes Verankerungselement muss einer über viele Jahre währenden, tagtäglichen Belastung, insbesondere auf Biegung (Zug- und Druckbelastung), zuverlässig standhalten. Ferner darf der Wurzelkanal bzw. der parapulpäre Kanal, in dem die Verankerungspartie eingesetzt ist, nicht gesprengt werden. Im allgemeinen sind die bis dato auf den Markt gebrachten Verankerungselemente hinsichtlich der vorgenannten Anforderungen zufriedenstellend. Aber im beständigen Bestreben nach Vervollkommnung gibt es durchaus auf weitere Verbesserungen ausgerichtete Ziele. Infolge ständiger Beanspruchung der Verankerungselemente tritt im Laufe der Zeit doch eine gewisse Materialermüdung ein, so dass es durch Zusammentreffen mehrerer ungünstiger Umstände in der Praxis vereinzelt zu Brüchen des Verankerungselements sowie der Restzahnsubstanz und/oder des Aufbaus gekommen ist. Als besonders bruchgefährdete Stellen bei den Verankerungselementen zeigten sich der Übergang von der Verankerungs- zur Kopfpartie bzw. der Abschnitt des zur Kopfpartie hin auslaufenden Gewindes. Eine einfache Verstärkung des Materials durch Vergrösserung des Verankerungselements verbietet sich, da dies einen vergrösserten Aufnahmekanal erfordern würde, was eine sich negativ auswirkende Schwächung der verbleibenden Zahnsubstanz bedeutet.

Aus der internationalen Patentpublikation Wo 79/00275 ist ein Verankerungselement mit einem erheblich minimierten Gewinde bekannt. Hierdurch vermindert man zwar die Bruchgefahr und die Rissbildung im Dentin, jedoch wird die Festigkeit der Verankerung zwangsweise ebenfalls stark verringert.

Ferner ist ein Verankerungselement mit gerundeten Übergängen zwischen der Verankerungs- und Kopfpartie sowie zwischen den einzelnen Retentionstellern und mit einer längslaufenden Zementabflussrille bekannt (vgl. Firmenschrift: "Radix-Anker-Long" der Maillefer SA, Ballaigues/ Schweiz, 12.91). Mit den geometrisch einfach gerundeten Übergängen gelang es lediglich, die Bruchgefahr an der kritischsten Stelle in gewissem Umfang zu reduzieren. Die vorgesehene Zementabflussrille erfüllt zwar völlig ihre Funktion, jedoch muss der nach der Einarbeitung der Rille an deren Rand entstandene Grat in einem relativ aufwendigen und damit das Erzeugnis verteuernden, nachträglichen Arbeitsschritt wieder beseitigt werden.

Die insoweit vorhandenen Verankerungselemente können daher allesamt noch nicht als optimal hinsichtlich ihrer konstruktiven Gestaltung, mit deren Auswirkung auf die Festigkeit und den Herstellungsaufwand, bezeichnet werden. Die Erfindung hat sich daher die Aufgabe gestellt, die geometrischen Konturen an den bruchgefährdeten Übergängen, und bei schraubenförmigen Verankerungselementen deren Gewinde, so zu gestalten, dass die Haltbarkeit der Verankerungselemente entscheidend verbessert wird. Zugleich ist eine Vereinfachung der Zementabflussrille anzustreben.

Das Wesen der Erfindung besteht darin, dass sowohl das symmetrische Gewindeprofil als auch die Übergänge nach einer CAO-Methode (Computer Aided Optimization) optimiert werden und man somit eine homogene Spannungsverteilung entlang des Profils erhält. Die verwendete CAO-Methode ist im Report von C Mattheck: "Engineering Components Grow Like Trees", herausgegeben vom Kernforschungszentrum Karlsruhe, KfK 4648, November 1989, beschrieben und z.B in der DE-A-39 14 809 angewandt. Für das Gewindeprofil erfolgt die Optimierung am Übergang vom Gewindegrund in die Gewindeflanke und zwar einerseits hinsichtlich der Biegebelastung und anderseits hinsichtlich der Flächenpressung auf die Gewindeflanke. Zur Vermeidung unvertretbar hoher, lokaler Spannungsspitzen durch die Kerbwirkung der Gewindespitzen im Dentin sind die Gewindespitzen ebenfalls hinsichtlich Druck auf die Innenflanken des "Gewindenegativs" im Dentin optimiert. Nach der gleichen Methode wird der Übergang von der Verankerungs- zur Kopfpartie hinsichtlich der Biegebelastung optimiert. Dieses Ergebnis ist auch auf die Übergänge zwischen den Retentionstellern übertragbar. Bei schraubenförmigen Verankerungselementen wird die Zementabflussrille zwelteilig am gewindelosen Schaftsegment der Verankerungspartie sowie teilweise an der Kopfpartie zwecks Abfluss des Zementes unterhalb der Auflage vorgesehen.

Dank der Erfindung erhält man ein Verankerungselement dessen Gewindeprofil und Übergänge eine homogene Spannungsverteilung aufweisen bzw. eng lokalisierte Spitzenspannungen im Dentin vermeiden. Hierdurch verlängert sich die Lebensdauer der Verankerungselemente um ein Vielfaches und auf die verbliebene Zahnsubstanz wird weniger konzentrierter, sprengender Druck durch die eingesetzten Verankerungselemente ausgeübt. Zugleich erreicht man eine Vereinfachung der schraubenförmigen Verankerungselemente im Bereich der Zementabflussrille.

Im folgenden wird das erfindungsgemässe Verankerungselement unter Bezugnahme auf die beigefügten Zeichnungen detaillierter beschrieben. Dabei zeigen:

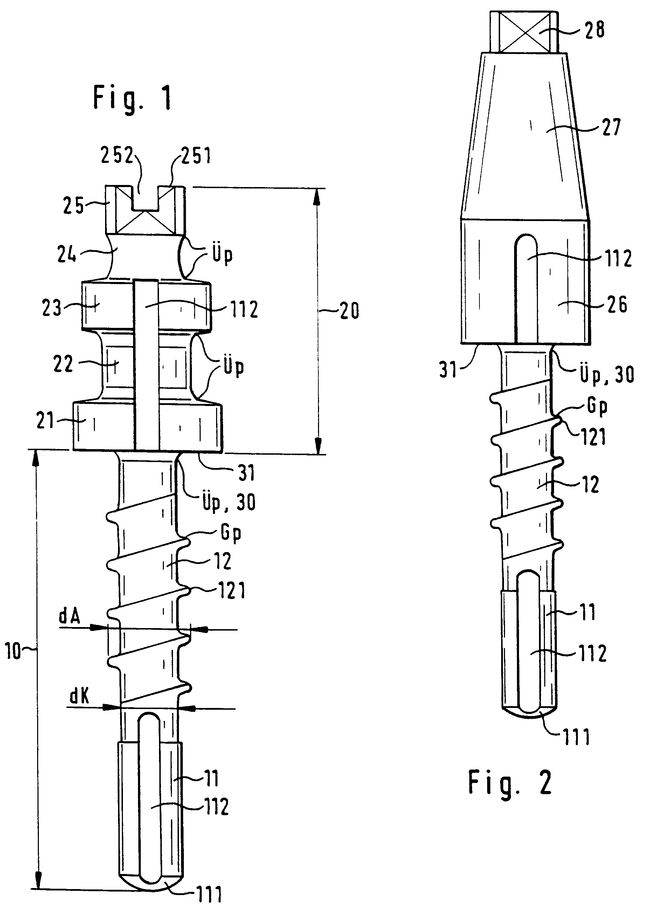

- Figur 1 :: eine Wurzelkanalschraube für den Seitenzahnbereich mit drei Retentionstellern;
- Figur 2 :: eine Wurzelkanalschraube für den Frontzahnbereich mit einem Kopfstück;

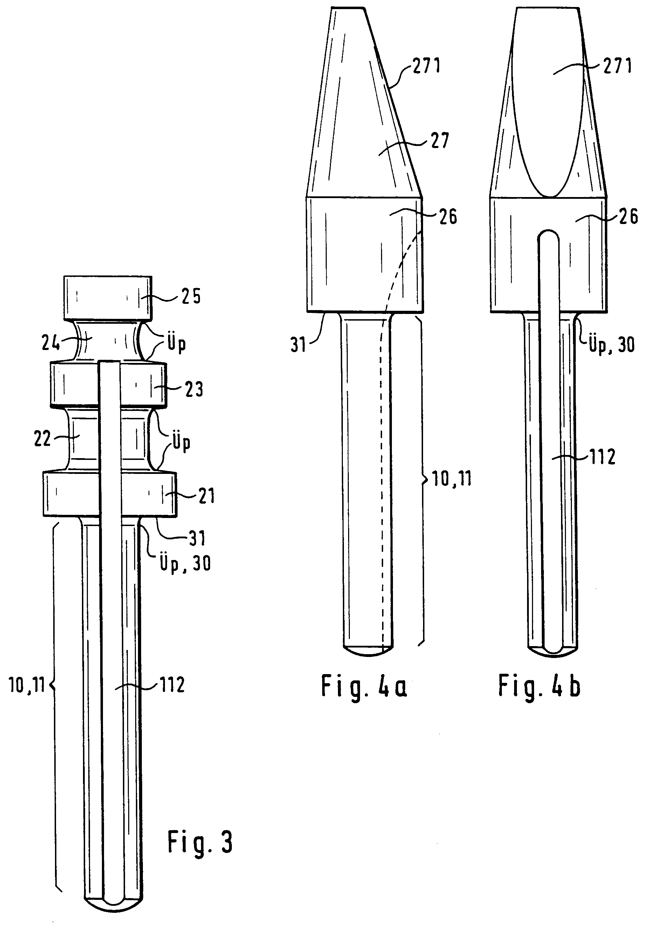

- Figur 3 :: einen Wurzelkanalstift für den Seitenzahnbereich mit drei Retentionstellern;
- Figur 4a:: einen Wurzelkanalstift für den Frontzahnbereich mit einem Kopfstück in der Seitenansicht;
- Figur 4b:: den Wurzelkanalstift gemäss Figur 4a in der Vorderansicht;
- Figur 5a:: die Ausgangsgeometrie des Gewindeprofils vor der Optimierung;
- Figur 5b:: das Gewindeprofil über den Bereich einer halben Steigung im X-Y-Koordinatensystem nach der Optimierung;
- Figur 5c:: die Grobgeometrie des Gewindeprofils nach der Optimierung;
- Figur 6a:: den Übergang zwischen der Verankerungs- und der Kopfpartie im X-Y-Koordinatensystem nach der Optimierung und
- Figur 6b:: den Profilverlauf der optimierten Übergänge zwischen zwei Retentionstellern.

### Figur 1

Die Wurzelkanalschraube besteht aus der Verankerungspartie 10, die in einen präparierten Wurzelkanal eines devitalen Zahnes eingedreht wird, sowie aus der Kopfpartie 20, die im eingeschraubten Zustand aus dem Wurzelkanal herausragt und um die herum der restaurative Aufbau erfolgt. Zuunterst besitzt die Verankerungspartie 10 ein gewindeloses, zylindrisches Schaftsegment 11, an das sich das Gewindesegment 12 anschliesst, welches am Auflageübergang 30 an die Kopfpartie 20 ansetzt. Auf dem Gewindesegment 12 befindet sich ein symmetrisches Gewinde 121 mit dem speziellen, erfindungsgemäss optimiertem Gewindeprofil Gp. Das apikale Schaftsegment 11 ist grösser als der Kerndurchmesser d_{K} des Gewindesegments 12, jedoch kleiner als dessen Aussendurchmesser d_{A}. Von der Stirnseite 111 des Schaftsegments 11 erstreckt sich eine äusserliche, parallel zur Längsachse verlaufende, gerade Zementabflussrille 112 bis in den Anfangsbereich des Gewindes 121. Das Gewinde 121 läuft bereits vor Erreichen des Auflageübergangs 30 aus, welcher ein besonders optimiertes Übergangsprofil Üp aufweist.

Am Auflageübergang 30 beginnt die Kopfpartie 20 mit einem ersten Retentionsteller 21, der erheblich grösser ist als der Aussendurchmesser d_{A}. Nach einem Zwischensteg 22 folgt ein verkleinerter zweiter Retentionsteller 23. Daran schliesst sich ein weiter verjüngter Zwischensteg 24 an, der in einen zuoberst abschliessenden, erneut verkleinerten dritten Retentionsteller 25 mündet. Die Zwischenstege 22 und 24 besitzen jeweilige, den benachbarten Retentionstellern 21 und 23 zugewandte Übergangsprofile Üp. Das letzte Übergangsprofil Üp, welches auf den obersten, dritten Retentionsteller 25 zuläuft, ist verkürzt, da sich die Durchmesser des oberen Zwischenstegs 24 und des dritten Retentionstellers 25 weitgehend angenähert haben.

Im Prinzip fluchtend zur Zementabflussrille 112 im Schaftsegment 11, setzt sich diese peripher durch die beiden Retentionsteller 21 und 23 fort. Der oberste Retentionsteller 25 besitzt keine zylindrische Form, sondern ist vierkantartig zum Eingriff eines Schraubwerkzeugs ausgebildet. Zusätzlich weist die Stirnseite 251 einen Kreuzschlitz 252 auf. Die Verankerungs- und Kopfpartie 10, 20 sowie die Retentionsteller 21, 23, 25 und die Zwischenstege 22, 24 sind zueinander allesamt koaxial angeordnet. Der erste Retentionsteller 21 besitzt unterseitig die Aufsatzfläche 31, die dazu bestimmt ist, im eingeschraubten Zustand auf dem Dentin möglichst vollständig und fugenlos aufzusetzen.

Für die gesamte weitere Beschreibung gilt folgende Festlegung. Sind in einer Figur zum Zweck zeichnerischer Eindeutigkeit Bezugsziffern enthalten, aber im unmittelbar zugehörigen Text nicht erläutert, so wird auf deren Erwähnung in vorangehenden Figurenbeschreibungen Bezug genommen.

### Figur 2

Die hier gezeigte Wurzelkanalschraube für den Frontzahnbereich unterscheidet sich zu der in der Vorgängerfigur gezeigten dadurch, dass die Kopfpartie 20 anstelle der Kombination aus zueinander beabstandeten Retentionstellern und dazwischenliegenden Zwischenstegen nun in kompakter Gestalt ausgebildet ist und aus einem an den Auflageübergang 30 ansetzenden Basiszylinder 26 besteht, der sich in einem aufwärts verjüngenden Konuspfeiler 27 fortsetzt, welcher seinerseits zuoberst mit einem Vierkantsegment 28 abschliesst. Gleichfalls vorhanden sind das Gewinde 121 mit dem Gewindeprofil Gp, der Auflageübergang 30 mit dem Übergangsprofil Üp, die mehrteilige Zementabflussrille 112, deren oberer Abschnitt peripher durch den Basiszylinder 26 verläuft sowie die Auflagefläche 31.

### Figur 3

Der gezeigte Wurzelkanalstift für den Seitenzahnbereich besitzt eine Verankerungspartie 10 in Form eines durchgängigen Schaftsegments 11 mit dem gleichen Schaftdurchmesser, wie ihn die adäquate Wurzelkanalschraube aufweist, jedoch ist daran kein Gewindesegment 12 vorhanden. Ebenfalls vorhanden sind die Zementabflussrille 112, die sich mindestens durch den ersten Retentionsteller 21 erstreckt, sowie die Auflagefläche 31 und mehrfach das Übergangsprofil Üp. Der oberste Retentionsteller 25 weist hier eine zylindrische Form auf; das Ansetzen eines Schraubwerkzeugs entfällt.

### Figuren 4a und 4b

Dieser Wurzelkanalstift ist für den Frontzahnbereich vorgesehen. An die Verankerungspartie 10, in Form eines durchgehenden Schaftsegments 11, schliesst sich der Basiszylinder 26 mit dem obenauf endenden Konuspfeiler 27 an. Am Konuspfeiler 27 ist eine zu den Verhältnissen im Frontzahnbereich adäquate Anschrägung 271 vorgesehen. Wiederum vorhanden sind die Zementabflussrille 112, die Aufsatzfläche 31 und das Übergangsprofil Üp.

Die Figuren 5a bis 6b betreffen die Ausgangsgeometrie am Gewinde sowie die erfindungsgemäss optimierten Gewinde- bzw. Übergangsprofile Gp, Üp.

### Figur 5a

In der Ausgangssituation - vor der CAO-Optimierung - ist ein symmetrisches Rundgewinde vorhanden, z.B. mit einer Steigung von 1,00mm und einer Gewindetiefe von 0,3mm. Die übrigen beispielhaften Masse sind der Figur entnehmbar. Der Gewindegrund besitzt eine ungewölbte Mantelfläche; Auf- und Abstieg am Gewindezahn sowie dessen Spitze weisen die exakten Konturen von Kreisbögen auf.

### Figuren 5b und 5c

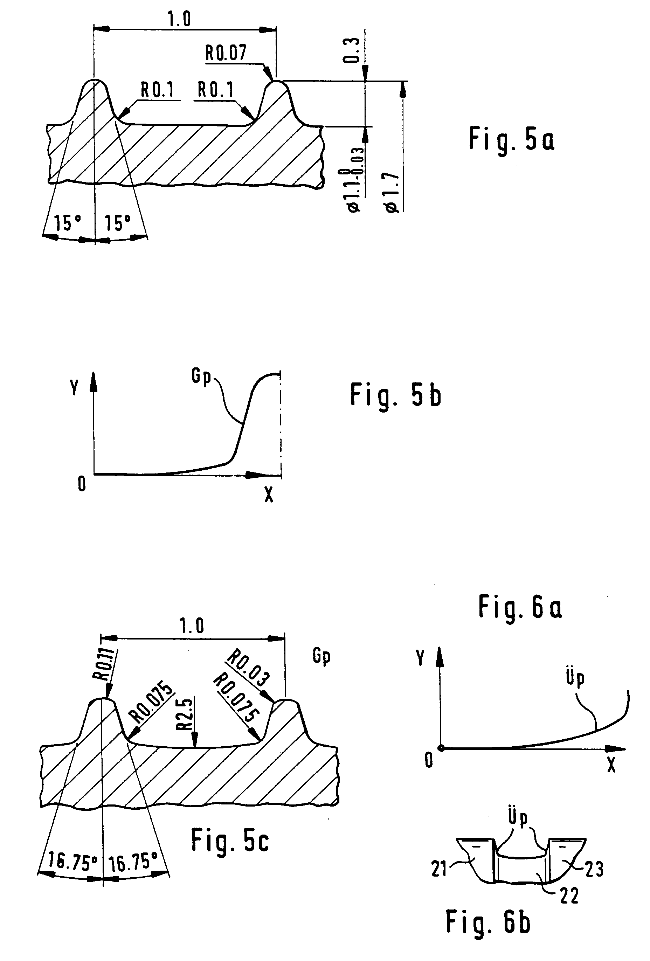

Nach der auf der Bionik basierenden CAO-Optimierungsmethode (vgl. die im Abschnitt "Wesen der Erfindung" gemachten Angaben), wird das Gewindeprofil am Übergang vom Gewindegrund in die Gewindeflanke sowohl hinsichtlich Biegebelastung als auch Flächenpressung auf die Gewindeflanke optimiert. Eine Optimierung erfolgt auch im Bereich der Gewindespitzen zum Zwecke der minimierung von lokalen Spannungskonzentrationen im Dentin. Auf diese Weise erhält man das Gewindeprofil Gp mit homogener Spannungsverteilung entlang des Gewindeprofils Gp, wie es schematisch in Figur 5b gezeigt und dem Prinzip nach in Figur 5c bemasst ist sowie durch die Angaben der X-Y-Koordinaten zu 43 berechneten Knotenpunkten gemäss nachstehender Tabelle 1 für eine halbe Steigung definiert wird.

**Tabelle 1**

| Knoten-Nr. | X-Koordinate [mm] | Y-Koordinate [mm] |
|---|---|---|
| 1 | 0.0000 | 0.0000 |
| 2 | 0.0348 | 0.0002 |
| 3 | 0.0697 | 0.0006 |
| 4 | 0.1045 | 0.0014 |
| 5 | 0.1393 | 0.0026 |
| 6 | 0.1685 | 0.0040 |
| 7 | 0.1945 | 0.0056 |
| 8 | 0.2176 | 0.0073 |
| 9 | 0.2379 | 0.0093 |
| 10 | 0.2562 | 0.0112 |
| 11 | 0.2722 | 0.0132 |
| 12 | 0.2866 | 0.0152 |
| 13 | 0.2999 | 0.0174 |
| 14 | 0.3131 | 0.0199 |
| 15 | 0.3259 | 0.0227 |
| 16 | 0.3379 | 0.0262 |
| 17 | 0.3488 | 0.0310 |
| 18 | 0.3582 | 0.0364 |
| 19 | 0.3636 | 0.0415 |
| 20 | 0.3684 | 0.0488 |
| 21 | 0.3734 | 0.0567 |
| 22 | 0.3778 | 0.0650 |
| 23 | 0.3809 | 0.0738 |
| 24 | 0.3843 | 0.0860 |
| 25 | 0.3883 | 0.0980 |
| 26 | 0.3920 | 0.1098 |
| 27 | 0.3957 | 0.1217 |
| 28 | 0.3993 | 0.1337 |
| 29 | 0.4028 | 0.1456 |
| 30 | 0.4064 | 0.1576 |
| 31 | 0.4099 | 0.1696 |
| 32 | 0.4135 | 0.1820 |
| 33 | 0.4171 | 0.1944 |
| 34 | 0.4206 | 0.2068 |
| 35 | 0.4241 | 0.2192 |
| 36 | 0.4275 | 0.2317 |
| 37 | 0.4309 | 0.2417 |
| 38 | 0.4348 | 0.2503 |
| 39 | 0.4415 | 0.2569 |
| 40 | 0.4505 | 0.2624 |
| 41 | 0.4703 | 0.2707 |
| 42 | 0.4802 | 0.2730 |
| 43 | 0.5000 | 0.2749 |

### Figuren 6a und 6b

Ausgehend von einem abgerundeten, rechtwinkligen Auflage-Übergang 30 zwischen der Auflagefläche 31 und der darauf auftreffenden Verankerungspartie 10 wird dieser Auflage-Übergang 30 hinsichtlich Biegebelastung ebenfalls unter Anwendung der CAO-Methode optimiert. Auf diese Weise erhält man das Übergangsprofil Üp mit homogener Spannungsverteilung entlang des Übergangsprofils Üp, wie es schematisch in Figur 6a gezeigt und durch die Angaben der X-Y-Koordinaten zu 21 berechneten Knotenpunkten gemäss nachstehender Tabelle 2 definiert wird.

**Tabelle 2**

| Knoten-Nr. | X-Koordinate [mm] | Y-Koordinate [mm] |
|---|---|---|
| 1 | 0.0000 | 0.0000 |
| 2 | 0.0330 | 0.0010 |
| 3 | 0.0658 | 0.0013 |
| 4 | 0.0988 | 0.0023 |
| 5 | 0.1317 | 0.0035 |
| 6 | 0.1644 | 0.0050 |
| 7 | 0.1969 | 0.0071 |
| 8 | 0.2292 | 0.0100 |
| 9 | 0.2614 | 0.0130 |
| 10 | 0.2925 | 0.0177 |
| 11 | 0.3240 | 0.0227 |
| 12 | 0.3542 | 0.0288 |
| 13 | 0.3842 | 0.0374 |
| 14 | 0.4106 | 0.0457 |
| 15 | 0.4351 | 0.0551 |
| 16 | 0.4566 | 0.0668 |
| 17 | 0.4781 | 0.0795 |
| 18 | 0.4932 | 0.0927 |
| 19 | 0.4993 | 0.1074 |
| 20 | 0.4999 | 0.1313 |
| 21 | 0.5000 | 0.1589 |

### Figur 6b

Die ermittelten Masse zum Übergangsprofil Üp am Tellerübergang 30 sind linear auf andere Grössenverhältnisse übertragbar, so dass das erhaltene Übergangsprofil Üp beispielsweise auch für die Übergänge zwischen dem ersten und zweiten Retentionsteller 21, 23 sowie dem dazwischenliegenden Zwischensteg 22 eine hinreichende Gültigkeit hat. Diese hinreichende Gültigkeit ist an sämtlichen Übergangsprofilen Üp an einem Verankerungselement gegeben.

Zu den vorbeschriebenen Modifikationen an den Verankerungselementen sind weitere Variationen realisierbar. Hier ausdrücklich erwähnt seien noch:
- Entsprechend den konkreten Einsatzbedingungen wird man die Verankerungspartie 10 verkürzen bzw. verlängern; so könnten unterschiedlich lange Gewindesegmente 12 bzw. Schaftsegmente 11 vorgesehen werden, oder man verzichtet auf das apikale Schaftsegment 11 gänzlich. Verkürzen oder verlängern kann man auch die Kopfpartie 20, indem ein Retentionsteller mit dem dazugehörigen Zwischensteg entfällt bzw. hinzugefügt wird oder indem man die Höhe der zylindrokonischen Kopfpartie 20 variiert. Ein Sortiment von Verankerungselementen umfasst auch unterschiedliche Durchmesser hinsichtlich der Verankerungspartien und gegebenenfalls auch der Kopfpartien.
- Die Werte für das CAO-optimierte Gewindeprofil Gp sind linear auf andere Grössenverhältnisse übertragbar.
- Von der Erfindung sind somit nicht nur die im Ausführungsbeispiel herangezogenen Wurzelkanalschrauben umfasst, sondern auch Parapulpärschrauben mit ihren naturgemäss kleineren Abmessungen.
- Die ermittelten Werte haben unabhängig vom benutzten Werkstoff Geltung, so dass die Verankerungselemente nicht aus einer Titanlegierung bestehen müssen.

## Patentansprüche

1. Ermüdungsfeste Geometrie von parapulpären oder endodontischen Verankerungselementen in Form von Schrauben oder Stiften mit einer in einen Wurzelkanal bzw. einen parapulpären Kanal einzusetzenden Verankerungspartie (10) und einer Kopfpartie (20), wobei
a) bei einer Schraube auf der Verankerungspartie (10) über nahezu die gesamte Länge oder nur über sich ein partiell erstreckendes Gewindesegment (12) ein symmetrisches Gewinde (121) vorgesehen ist;
b) bei einem Stift die Verankerungspartie (10) in Form eines Schaftsegments (11) gebildet wird;
c) die Verankerungspartie (10) innerhalb eines gerundeten Auflageübergangs (30) in eine unterseitig an der Kopfpartie (20) vorhandene Auflagefläche (31) übergeht und
d) eine längs und peripher verlaufende Zementabflussrille (112) vorgesehen ist;
e) bei einer Schraube das Gewinde (121) am Übergang vom Gewindegrund in die Gewindeflanke mit dem Gewindeprofil (Gp), und bei einer Schraube sowie einem Stift die Auflageübergänge (30) mit dem Übergangsprofil (Üp) nach der CAO-Optimierungsmethode (Computer Aided Optimization) optimiert sind,
**dadurch gekennzeichnet**, dass
f) bei einer Schraube das Gewindeprofil (Gp) sowohl hinsichtlich Biegebelastung als auch Flächenpressung auf die Gewindeflanke und im Bereich der Gewindespitzen zum Zweck der Minimierung von lokalen Spannungskonzentrationen im Dentin, und bei einer Schraube und einem Stift das Übergangsprofil (Üp) hinsichtlich Biegebelastung derart optimiert sind, dass
g) das Gewindeprofil (Gp) für eine halbe Steigung durch die Angaben der X-Y-Koordinaten zu einer Vielzahl von Knotenpunkten gemäss folgender Tabelle definiert ist, wobei die angegebenen Masse durch lineare Multiplikation übertragbar sind:
| Knoten-Nr. | X-Koordinate [mm] | Y-Koordinate [mm] |
|---|---|---|
| 1 | 0.0000 | 0.0000 |
| 2 | 0.0348 | 0.0002 |
| 3 | 0.0697 | 0.0006 |
| 4 | 0.1045 | 0.0014 |
| 5 | 0.1393 | 0.0026 |
| 6 | 0.1685 | 0.0040 |
| 7 | 0.1945 | 0.0056 |
| 8 | 0.2176 | 0.0073 |
| 9 | 0.2379 | 0.0093 |
| 10 | 0.2562 | 0.0112 |
| 11 | 0.2722 | 0.0132 |
| 12 | 0.2866 | 0.0152 |
| 13 | 0.2999 | 0.0174 |
| 14 | 0.3131 | 0.0199 |
| 15 | 0.3259 | 0.0227 |
| 16 | 0.3379 | 0.0262 |
| 17 | 0.3488 | 0.0310 |
| 18 | 0.3582 | 0.0364 |
| 19 | 0.3636 | 0.0415 |
| 20 | 0.3684 | 0.0488 |
| 21 | 0.3734 | 0.0567 |
| 22 | 0.3778 | 0.0650 |
| 23 | 0.3809 | 0.0738 |
| 24 | 0.3843 | 0.0860 |
| 25 | 0.3883 | 0.0980 |
| 26 | 0.3920 | 0.1098 |
| 27 | 0.3957 | 0.1217 |
| 28 | 0.3993 | 0.1337 |
| 29 | 0.4028 | 0.1456 |
| 30 | 0.4064 | 0.1576 |
| 31 | 0.4099 | 0.1696 |
| 32 | 0.4135 | 0.1820 |
| 33 | 0.4171 | 0.1944 |
| 34 | 0.4206 | 0.2068 |
| 35 | 0.4241 | 0.2192 |
| 36 | 0.4275 | 0.2317 |
| 37 | 0.4309 | 0.2417 |
| 38 | 0.4348 | 0.2503 |
| 39 | 0.4415 | 0.2569 |
| 40 | 0.4505 | 0.2624 |
| 41 | 0.4703 | 0.2707 |
| 42 | 0.4802 | 0.2730 |
| 43 | 0.5000 | 0.2749 |
und;
h) das Übergangsprofil (Üp) durch die Angaben der X-Y-Koordinaten Zu einer Vielzahl von Knotenpunkten gemäss folgender Tabelle definiert ist, wobei die angegebenen Masse durch lineare Multiplikation übertragbar sind:
| Knoten-Nr. | X-Koordinate [mm] | Y-Koordinate [mm] |
|---|---|---|
| 1 | 0.0000 | 0.0000 |
| 2 | 0.0330 | 0.0010 |
| 3 | 0.0658 | 0.0013 |
| 4 | 0.0988 | 0.0023 |
| 5 | 0.1317 | 0.0035 |
| 6 | 0.1644 | 0.0050 |
| 7 | 0.1969 | 0.0071 |
| 8 | 0.2292 | 0.0100 |
| 9 | 0.2614 | 0.0130 |
| 10 | 0.2925 | 0.0177 |
| 11 | 0.3240 | 0.0227 |
| 12 | 0.3542 | 0.0288 |
| 13 | 0.3842 | 0.0374 |
| 14 | 0.4106 | 0.0457 |
| 15 | 0.4351 | 0.0551 |
| 16 | 0.4566 | 0.0668 |
| 17 | 0.4781 | 0.0795 |
| 18 | 0.4932 | 0.0927 |
| 19 | 0.4993 | 0.1074 |
| 20 | 0.4999 | 0.1313 |
| 21 | 0.5000 | 0.1589 |

2. Ermüdungsfeste Geometrie nach Patentanspruch 1, **dadurch gekennzeichnet**, dass der Auflageübergang (30) und sämtliche anderen Tellerübergänge an einem Verankerungselement das Übergangsprofil (Üp) aufweisen.

3. Ermüdungsfeste Geometrie nach Patentanspruch 1, **dadurch gekennzeichnet**, dass
a) bei einer Schraube die Zementabflussrille (112) im Bereich des Gewindesegments (12) unterbrochen ist und als Fortsatz in der Kopfpartie (20) ausläuft;
b) bei einem Stift die Zementabflussrille (112) sich über die gesamte Verankerungspartie (10) erstreckt und in der Konfpartie (20) ausläuft.

4. Ermüdungsfeste Geometrie nach Patentanspruch 1, **dadurch gekennzeichnet**, dass bei einer Schraube die Verankerungspartie (10) zuunterst, an das Gewindesegment (12) ansetzend, ein gewindeloses Schaftsegment (11) aufweist, dessen Durchmesser grösser als der Kerndurchmesser (d_{K}) des Gewindesegments (12), aber kleiner als dessen Aussendurchmesser (d_{A}) ist.

## Claims

1. Fatigue-resistant geometry of parapulpal or endodontic anchoring elements in the form of screws or posts with an anchoring portion (**10**), which is to be implanted in a root canal or a parapulpal canal, and a head of portion (**20**), where
a) in the case of a screw, a symmetrical thread (**121**) is provided on the anchoring portion (**10**), over virtually the entire length or only over a partial threaded segment (**12**);
b) in the case of a post, the anchoring portion (**10**) is in the form of a shank segment (**11**);
c) the anchoring portion (**10**) merges, in a rounded contact transition, into a bearing surface (**31**) present on the underside on the head portion (**20**), and
d) a longitudinally and peripherally extending cement run-off groove (**112**) is provided;
e) in the case of a screw, the thread (**121**) at the transition from the thread base to the thread flank with the thread profile (**Gp**), and in the case of a screw and of a post the bearing transitions (**30**) with the transition profile (**Üp**) are optimized by the CAO (Computer Aided Optimization) method, characterized in that,
f) in the case of a screw the thread profile (**Gp**) both in terms of bending load and surface pressure on the thread flank, and in the area of the thread crests, for the purpuse of minimization of local stress concentrations in the dentine, and in the case of a screw and of a post the transition profile (**Üp**) in terms of bending load are optimized in such a manner that,
g) the thread profile (**Gp**) is defined by the X-Y coordinate data for a plurality of node points for one half pitch in accordance with the table below, the specified values are transferable by linear multiplication:
| Node no. | X-coordinate [mm] | Y-coordinate [mm] |
|---|---|---|
| 1 | 0.0000 | 0.0000 |
| 2 | 0.0348 | 0.00002 |
| 3 | 0.0697 | 0.0006 |
| 4 | 0.1045 | 0.0014 |
| 5 | 0.1393 | 0.0026 |
| 6 | 0.1685 | 0.0040 |
| 7 | 0.1945 | 0.0056 |
| 8 | 0.2176 | 0.0073 |
| 9 | 0.2379 | 0.0093 |
| 10 | 0.2562 | 0.0112 |
| 11 | 0.2722 | 0.0132 |
| 12 | 0.2866 | 0.0152 |
| 13 | 0.2999 | 0.0174 |
| 14 | 0.3131 | 0.0199 |
| 15 | 0.3259 | 0.0227 |
| 16 | 0.3379 | 0.0262 |
| 17 | 0.3488 | 0.0310 |
| 18 | 0.3582 | 0.0364 |
| 19 | 0.3636 | 0.0415 |
| 20 | 0.3684 | 0.0488 |
| 21 | 0.3734 | 0.0567 |
| 22 | 0.3778 | 0.0650 |
| 23 | 0.3809 | 0.0738 |
| 24 | 0.3843 | 0.0860 |
| 25 | 0.3883 | 0.0980 |
| 26 | 0.3920 | 0.1098 |
| 27 | 0.3957 | 0.1217 |
| 28 | 0.3993 | 0.1337 |
| 29 | 0.4028 | 0.1456 |
| 30 | 0.4064 | 0.1576 |
| 31 | 0.4099 | 0.1696 |
| 32 | 0.4135 | 0.1820 |
| 33 | 0.4171 | 0.1944 |
| 34 | 0.4206 | 0.2068 |
| 35 | 0.4241 | 0.2192 |
| 36 | 0.4275 | 0.2317 |
| 37 | 0.4309 | 0.2417 |
| 38 | 0.4348 | 0.2503 |
| 39 | 0.4415 | 0.2569 |
| 40 | 0.4505 | 0.2624 |
| 41 | 0.4703 | 0.2707 |
| 42 | 0.4802 | 0.2730 |
| 43 | 0.5000 | 0.2749 |
and
h) the transition profile (**Üp**) is defined by the X-Y coordinate data for a plurality of node points in accordance with the table below, the specified values are transferable by linear multiplication:
| Node no. | X-coordinate [mm] | Y-coordinate [mm] |
|---|---|---|
| 1 | 0.0000 | 0.0000 |
| 2 | 0.0330 | 0.0010 |
| 3 | 0.0658 | 0.0013 |
| 4 | 0.0988 | 0.0023 |
| 5 | 0.1317 | 0.0035 |
| 6 | 0.1644 | 0.0050 |
| 7 | 0.1969 | 0.0071 |
| 8 | 0.2292 | 0.0100 |
| 9 | 0.2614 | 0.0130 |
| 10 | 0.2925 | 0.0177 |
| 11 | 0.3240 | 0.0227 |
| 12 | 0.3542 | 0.0288 |
| 13 | 0.3842 | 0.0374 |
| 14 | 0.4106 | 0.0457 |
| 15 | 0.4351 | 0.0551 |
| 16 | 0.4566 | 0.0668 |
| 17 | 0.4781 | 0.0795 |
| 18 | 0.4932 | 0.0927 |
| 19 | 0.4993 | 0.1074 |
| 20 | 0.4999 | 0.1313 |
| 21 | 0.5000 | 0.1589 |

2. Fatigue-resistant geometry according to Patent Claim 1, characterized in that the bearing transition (**30**) and all the other plate transitions of an anchoring element exhibit the transition profile (**Üp**).

3. Fatigue-resistant geometry according to Patent Claim 1, characterized in that
a) in the case of a screw, the cement run-off groove (**112**) is interrupted in the area of the threaded segment (**12**) and runs out as a continuation in the head portion (**20**);
b) in the case of a post, the cement run-off groove (**112**) extends over the entire anchoring portion (**10**) and runs out in the head portion (**20**).

4. Fatigue-restistant geometry according to Patent Claim 1, characterized in that, in the case of a screw, the anchoring portion (**10**) has, at the very bottom, an unthreaded shank segment (**11**) which adjoins the threaded segment (**12**) and whose diameter is greater than the minor diameter (**d**_{**K**}) of the threaded segment (**12**), but smaller than its major diameter (**d**_{**A**}).

## Revendications

1. Géométrie résistant à la fatigue d'éléments d'ancrage parapulpaires ou endodontiques en forme de vis ou de broches avec une partie d'ancrage (10) à insérer dans un canal radicalaire ou un canal parapulpaire et une partie de tête (20), dans laquelle
a) on prévoit, dans le cas d'une vis, sur la partie d'ancrage (10), sur presque toute sa longueur ou seulement sur un segment de filetage (12) s'étendant partiellement, un filet symétrique (121);
b) dans le cas d'une broche, la partie d'ancrage (10) est formée en forme d'un segment de tige (11);
c) la partie d'ancrage (10) passe par une transition de support arrondie (30) à une surface de support (31) prévue sous la partie de tête (20) et
d) on prévoit une rainure d'écoulement du ciment (112) s'étendant longitudinalement et sur la périphérie;
e) dans le cas d'une vis, le filet (121) au niveau de la transition du fond de filet au flanc de filet est optimisé avec le profil de filetage (Gp) et dans le cas d'une vis ainsi que d'une broche, les transitions de support (30) sont optimisées avec le profil de transition (Üp) selon la méthode d'optimisation par OAO (Optimisation Assistée par Ordinateur),
caractérisée en ce que
f) dans le cas d'une vis, le profil de filetage (Gp) tant du point de vue de la charge en flexion que de la pression superficielle sur le flanc de filet et dans la zone des sommets du filet afin de minimiser les concentrations de tensions locales dans la dentine, et dans le cas d'une vis et d'une broche, le profil de transition (Üp), du point de vue de la charge de flexion, sont optimisés de telle sorte que
g) le profil de filetage (Gp) est défini pour un demi-pas par les données des coordonnées X-Y par rapport à une pluralité de noeuds selon le tableau suivant, dans lequel les mesures indiquées peuvent être transférées par multiplication linéaire:
| N° de noeud | Coordonnée X [mm] | Coordonnée Y [mm] |
|---|---|---|
| 1 | 0,0000 | 0,0000 |
| 2 | 0,0348 | 0,0002 |
| 3 | 0,0697 | 0,0006 |
| 4 | 0,1045 | 0,0014 |
| 5 | 0,1393 | 0,0026 |
| 6 | 0,1685 | 0,0040 |
| 7 | 0,1945 | 0,0056 |
| 8 | 0,2176 | 0,0073 |
| 9 | 0,2379 | 0,0093 |
| 10 | 0,2562 | 0,0112 |
| 11 | 0,2722 | 0,0132 |
| 12 | 0,2866 | 0,0152 |
| 13 | 0,2999 | 0,0174 |
| 14 | 0,3131 | 0,0199 |
| 15 | 0,3259 | 0,0227 |
| 16 | 0,3379 | 0,0262 |
| 17 | 0,3488 | 0,0310 |
| 18 | 0,3582 | 0,0364 |
| 19 | 0,3636 | 0,0415 |
| 20 | 0,3684 | 0,0488 |
| 21 | 0,3734 | 0,0567 |
| 22 | 0,3778 | 0,0650 |
| 23 | 0,3809 | 0,0738 |
| 24 | 0,3843 | 0,0860 |
| 25 | 0,3883 | 0,0980 |
| 26 | 0,3920 | 0,1098 |
| 27 | 0,3957 | 0,1217 |
| 28 | 0,3993 | 0,1337 |
| 29 | 0,4028 | 0,1456 |
| 30 | 0,4064 | 0,1576 |
| 31 | 0,4099 | 0,1696 |
| 32 | 0,4135 | 0,1820 |
| 33 | 0,4171 | 0,1944 |
| 34 | 0,4206 | 0,2068 |
| 35 | 0,4241 | 0,2192 |
| 36 | 0,4275 | 0,2317 |
| 37 | 0,4309 | 0,2417 |
| 38 | 0,4348 | 0,2503 |
| 39 | 0,4415 | 0,2569 |
| 40 | 0,4505 | 0,2624 |
| 41 | 0,4703 | 0,2707 |
| 42 | 0,4802 | 0,2730 |
| 43 | 0,5000 | 0,2749 |
et
h) le profil de transition (Üp) est défini par les données de coordonnées X-Y par rapport à une pluralité de noeuds selon le tableau suivant, dans lequel les mesures données peuvent être transférées par multiplication linéaire:
| N° de noeud | Coordonnée X [mm] | Coordonnée Y [mm] |
|---|---|---|
| 1 | 0,0000 | 0,0000 |
| 2 | 0,0330 | 0,0010 |
| 3 | 0,0658 | 0,0013 |
| 4 | 0,0988 | 0,0023 |
| 5 | 0,1317 | 0,0035 |
| 6 | 0,1644 | 0,0050 |
| 7 | 0,1969 | 0,0071 |
| 8 | 0,2292 | 0,0100 |
| 9 | 0,2614 | 0,0130 |
| 10 | 0,2925 | 0,0177 |
| 11 | 0,3240 | 0,0227 |
| 12 | 0,3542 | 0,0288 |
| 13 | 0,3842 | 0,0374 |
| 14 | 0,4106 | 0,0457 |
| 15 | 0,4351 | 0,0551 |
| 16 | 0,4566 | 0,0668 |
| 17 | 0,4781 | 0,0795 |
| 18 | 0,4932 | 0,0927 |
| 19 | 0,4993 | 0,1074 |
| 20 | 0,4999 | 0,1313 |
| 21 | 0,5000 | 0,1589 |

2. Géométrie résistant à la fatigue selon la revendication 1, caractérisée en ce que la transition de support (30) et toutes les autres transitions de plateau présentent le profil de transition (Üp) sur un élément d'ancrage.

3. Géométrie résistant à la fatigue selon la revendication 1, caractérisée en ce que
a) dans le cas d'une vis, la rainure d'écoulement du ciment (112) est interrompue dans la zone du segment de filetage (12) et se termine en tant que saillie dans la partie de tête (20);
b) dans le cas d'une broche, la rainure d'écoulement du ciment (112) s'étend sur toute la partie d'ancrage (10) et se termine dans la partie de tête (20).

4. Géométrie résistant à la fatigue selon la revendication 1, caractérisée en ce que dans le cas d'une vis, la partie d'ancrage (10) présente, dans sa partie inférieure, un segment de tige sans filetage (11), fixé au segment de filetage (12), dont le diamètre est plus grand que le diamètre du coeur (d_{K}) du segment de filetage (12), mais plus petit que son diamètre extérieur (d_{A}).
